# EUROPÄISCHE PATENTSCHRIFT

(11) **EP 0 783 933 B1**
(45) Veröffentlichungstag und Bekanntmachung des Hinweises auf die Patenterteilung: **06.03.2002**
(21) Anmeldenummer: 96810716.9
(22) Anmeldetag: 28.10.1996
(51) Int. Cl.: B23Q 11/00, B23Q 11/08, B23Q 16/00

(54) **Bohr- und Meisselgerät**
Drilling or chiseling tool
Outil pour forer et ciseler

(30) Priorität: 12.01.1996 DE 19600829
(43) Veröffentlichungstag der Anmeldung: 16.07.1997
(73) Patentinhaber: HILTI Aktiengesellschaft, 9494 Schaan (LI)
(72) Erfinder: Burger, Helmut, 82272 Moorenweis (DE)
(74) Vertreter: Wildi, Roland

(56) Entgegenhaltungen:
- EP-A- 0 218 744
- EP-A- 0 261 374
- DE-A- 1 427 714
- DE-C- 432 832
- US-A- 3 583 821
- US-A- 4 117 750

## Beschreibung

Die Erfindung betrifft eine Vorrichtung zum Auffangen von Bohrklein und Staub für Bohrgeräte mit einem, zum Befestigen an einem Gehäuseteil des Bohrgerätes vorgesehenen Flanschteil, einem parallel zur Längsachse des Flanschteiles zusammendrückbaren, mit dem Flanschteil in Verbindung stehenden Behältnis und einem ringförmigen Dichtungselement, das mit einem rotierenden Teil des Bohrgerätes in Kontakt steht.

Aus der DE-OS 1 427 714 ist eine Vorrichtung zum Auffangen von Bohrklein und Staub für ein Bohrgerät bekannt. Die Vorrichtung weist ein Flanschteil, einen mit dem Flanschteil verbundenen Faltenbalg und ein am Flanschteil angeordnetes scheibenförmiges Dichtungselement mit einer zentralen Durchtrittsöffnung auf. Diese Durchtrittsöffnung wird durchsetzt von einem rotierenden Teil des Bohrgerätes in Form eines in einer Werkzeugaufnahme eingespannten Bohrers. Bei einer Inbetriebnahme des Bohrgerätes dreht sich der Bohrer gegenüber dem Dichtungselement. Die dabei entstehende Reibung führt zu einer Erwärmung und zu einem starken Verschleiss des Dichtungselementes.

Der Erfindung liegt die Aufgabe zugrunde, eine Vorrichtung zum Auffangen von Bohrklein und Staub zu schaffen, dessen Dichtungselement verschleissfrei und dicht mit einem rotierenden Teil eines Bohrgerätes zusammenwirkt, wobei unter rotierenden Teilen insbesondere Bohrer und Werkzeugaufnahmen verstanden werden. Insbesondere ist die Erwärmung und der dadurch auftretende Verschleiss des Dichtungselements in vermeiden.

Erfindungsgemäss wird die Aufgabe dadurch gelöst, dass das Dichtungselement in einer umlaufend ausgebildeten, zum Zentrum hin offenen Vertiefung des Flanschteils drehbar gelagert ist.

Durch die drehbar gelagerte Anordnung des Dichtungselements in einer umlaufend ausgebildeten Vertiefung des Flanschteils, wobei die Vertiefung zum Zentrum des Flanschteils hin offen ist, wird die Möglichkeit geschaffen, das Dichtungselement mit einem rotierenden Teil des Bohrgeräts in Verbindung zu bringen, ohne dass das Dichtungselement durch Verschleiss beschädigt wird.

Zweckmässigerweise ist das Dichtungselement an den Seitenwänden der Vertiefung unter Zwischenlage je eines Filzringes abgestützt. Die Filzringe gewährleisten eine verschleissfreie Lagerung des Dichtungselements gegenüber dem Flanschteil bzw. gegenüber der Vertiefung des Flanschteils. Je ein Filzring ist dabei jeweils zwischen einer der beiden Seitenwände und dem Dichtungselement angeordnet.

Um eine Verdrehung des Filzrings gegenüber dem Flanschteil, bzw. gegenüber einer ersten Seitenwand, verhindern zu können, ist vorzugsweise die mit einem ersten Filzring zusammenwirkende erste Seitenwand mit Vorsprüngen versehen. Die von der Seitenwand abstehenden Vorsprünge ragen in den Filzring und halten diesen fest. Die Höhe dieser Vorsprünge ist geringer als die Dicke des ersten Filzrings. Beispielsweise sind die Vorsprünge als im wesentlichen senkrecht von der ersten Seitenwand abragende Noppen ausgebildet.

Damit kein Bohrgut oder Staub zwischen den auf der ersten Seitenwand fest angeordneten Filzring und dem Dichtungselement gelangen kann, sind zweckmässigerweise zwischen einer zweiten Seitenwand der Vertiefung und einem zweiten Filzring eine an dem zweiten Filzring anliegende Druckscheibe und eine Wellscheibe angeordnet. Die sich an der zweiten Seitenwand axial abstützende Wellscheibe drückt den zweiten Filzring unter Zwischenlage der Druckscheibe axial gegen eine der Bohrrichtung abgewandte Fläche des Dichtungselements. Dadurch wird eine in Bohrrichtung weisende Fläche des Dichtungselementes gegen den ersten Filzring gedrückt.

Um eine Verdrehung des zweiten Filzringes gegenüber der Druckscheibe verhindern zu können, ist vorzugsweise die dem zweiten Filzring zugewandte Seite der Druckscheibe mit Vorsprüngen versehen. Die von der Druckscheibe abstehenden Vorsprünge ragen in den zweiten Filzring und halten diesen fest. Die Höhe dieser Vorsprünge ist geringer als die Dicke des zweiten Filzringes. Beispielsweise sind die Vorsprünge als im wesentlichen senkrecht von der Druckscheibe abrägende Noppen ausgebildet.

Aus Gründen der Montierbarkeit des Dichtungselements, der Filzscheiben, der Druckscheibe und der Wellscheibe in dem Flanschteil ist vorzugsweise die zweite Seitenwand der Vertiefung von einem Innensicherungsring gebildet.

Das Dichtungselement ist mit einem rotierenden Teil des Bohrgerätes in Verbindung bringbar. Beispielsweise kann das Dichtungselement einen Bohrer oder eine Werkzeugaufnahme dichtend umgreifen. Damit eine ausreichende Abdichtung zwischen dem Dichtungselement und dem rotierenden Teil des Bohrgeräts erreicht werden kann, weist vorteilhafterweise das ringförmige Dichtungselement eine sich im wesentlichen parallel zur Längsachse des Flanschteiles erstreckende, ringförmige Dichtungsfläche auf.

Beispielsweise wirkt die ringförmige Dichtungsfläche des Dichtungselementes mit der Aussenkontur einer rotierenden Werkzeugaufnahme zusammen. Damit keine Verdrehung zwischen der Dichtungsfläche und der Werkzeugaufnahme, sondern eine Verdrehung des Dichtungselementes gegenüber dem Flanschteil entsteht, ist vorzugsweise die Dichtungsfläche mit einer profilierten Obefläche versehen. Mit Hilfe dieser profilierten Oberfläche kann eine formschlüssige Verbindung des Dichtungselementes mit einer ebenfalls profilierten Aussenkontur der Werkzeugaufnahme geschaffen werden.

Zweckmässigerweise dient das Flanschteil der Aufnahme und der Führung eines Tiefenanschlags. Da das an dem Flanschteil angeordnete, zusammendrückbare Behältnis den Bohrer abdeckt, sieht die Bedienungsperson während der Erzeugung einer Bohrung nicht wie tief sich der Bohrer bereits im Untergrund befindet. Mit der Verwendung eines Tiefenanschlags kann dieses Problem umgangen werden. Die zusätzliche Anordnung eines Aufnahmebereiches für einen Tiefenanschlag an dem Flanschteil ist wirtschaftlich realisierbar und bringt zudem den Vorteil, dass der an dem Flanschteil angeordnete Tiefenanschlag zusammen mit der Vorrichtung zum Auffangen von Bohrklein und Staub von dem Bohrgerät abgenommen werden kann, wenn die Vorrichtung nicht mehr benötigt wird.

Aus Günden der wirtschaftlichen Herstellung und aus Gründen der einfachen Einstellbarkeit der gewünschten Bohrtiefe wird zweckmässigerweise der Tiefenanschlag von einem parallel zur Längsachse des Flanschteils angeordneten, relativ zum Flanschteil verschiebbaren, mit dem Behältnis verbundenen stabförmigen Übertragungselement und einem am Übertragungselement axial festlegbaren Anschlagelement gebildet.

Die Erfindung wird anhand von Zeichnungen, die ein Ausführungsbeispiel zeigen, näher erläutert. Es zeigen:
- Fig. 1: eine erfindungsgemässe Vorrichtung zum Auffangen von Bohrklein und Staub, in geschnittener Darstellung;

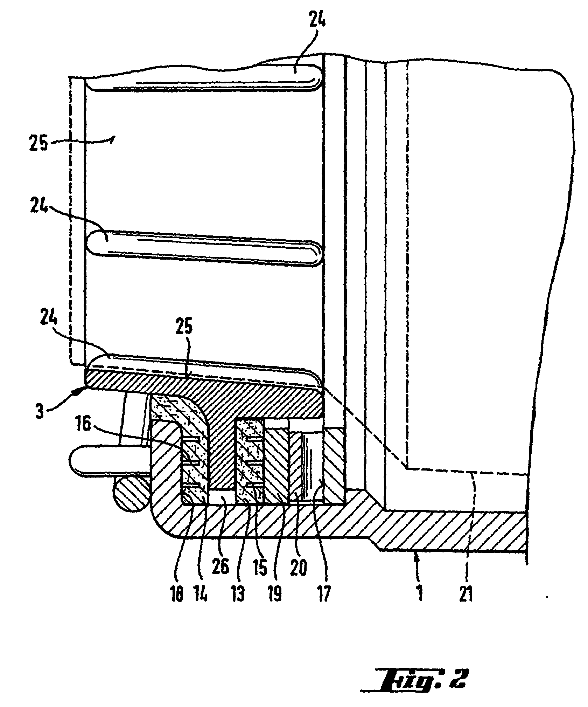

- Fig. 2: eine vergrösserte Darstellung des in der Fig. 1 mit dem Buchstaben A bezeichneten Bereichs.

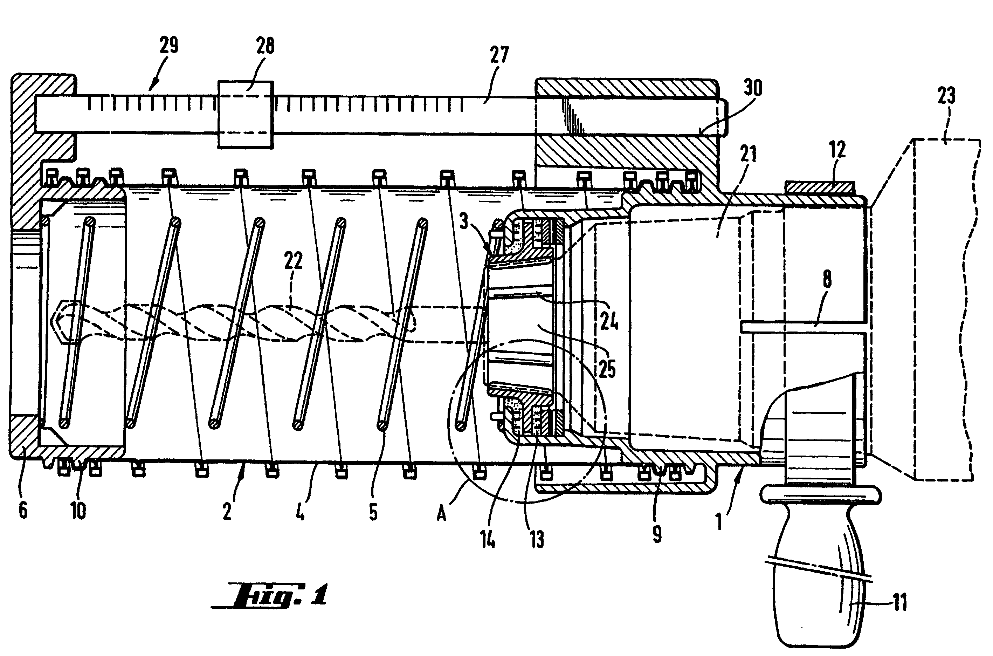

Die in der Fig. 1 dargestellte Vorrichtung zum Auffangen von Bohrklein und Staub setzt sich aus einem Flanschteil 1 und einem am Flanschteil 1 angeordneten, zusammendrückbaren Behältnis 2 zusammen. Das Flanschteil 1 steht mit einem strichliert dargestellten Gehäuse 23 eines Bohrgerätes in Verbindung. Jener Bereich des Flanschteils 1, der mit dem Gehäuse 23 in Verbindung steht, weist einen parallel zur Längserstreckung des Flanschteils 1 verlaufenden Längsschlitz 8 auf. Ein mit einem Seitenhandgriff 11 in Verbindung stehender Spannring 12 umgibt den im Bereich des Längsschlitzes 8 radial verformbaren Bereich des Flanschteils 1.

Das Flanschteil 1 umgibt eine, das Gehäuse 23 des Bohrgerätes in Bohrrichtung axial überragende Werkzeugaufnahme 21 in der ein Bohrer 22 befestigt ist. Ein im bohrrichtungsseitigen Endbereich des Flanschteils 1 angeordnetes, ringförmiges Dichtungselement 3 steht mit einer profilierten Oberfläche 24 einer ringförmigen Dichtungsfläche 25 in formschlüssiger Verbindung mit einer entsprechend profilierten Aussenkontur der Werkzeugaufnahme 21.

Das Dichtungselement 3 ist in einer Vertiefung 26 des Flanschteils 1 drehbar gelagert. Die Vertiefung 1 weist eine erste, der Bohrrichtung abgewandte Seitenwand 18 auf, die einer zweiten, in Bohrrichtung weisenden Seitenwand 17 gegenüberliegt. Die zweite Seitenwand 17 wird gebildet von einem in dem Flanschteil 1 verspannten Innensicherungsring.

Zwischen einer in Bohrrichtung weisenden Fläche des Dichtungselementes 3 und der ersten Seitenwand18 befindet sich ein erster Filzring 14, der mittels ersten Vorsprüngen 16 fest mit der ersten Seitenwand 18 verbunden ist. Die ersten Vorsprünge 16 werden von Noppen gebildet, die im wesentlichen senkrecht von der ersten Seitenwand 18 abragen. Die Höhe der Noppen ist geringer als die Dicke des ersten Filzringes 14.

Die ringförmige Dichtungsfläche 25 überragt das Flanschteil 1 in Bohrrichtung. Die radiale Abdichtung zwischen der Aussenkontur des Dichtungselementes 3 in dem das Flanschteil 1 in Bohrrichtung überragenden Bereich und dem Flanschteil 1 erfolgt ebenfalls mit Hilfe des ersten Filzrings 14.

Zwischen einer von der Bohrrichtung abgewandten Fläche des Dichtungselementes 3 und der zweiten Seitenwand 17 befindet sich ein zweiter Filzring 13, der mittels einer Wellscheibe 20 in Bohrrichtung gegen die der Bohrrichtung abgewandte Fläche des . Dichtungselements 3 gedrückt wird. Zwischen der Wellscheibe 20 und dem zweiten Filzring 13 ist eine, zweite Vorsprünge 15 aufweisende Druckscheibe 19 angeordnet. Die zweiten Vorsprünge 15 werden von Noppen gebildet, die im wesentlichen senkrecht von der in Bohrrichtung weisenden Seite der Druckscheibe 19 abragen. Die Höhe der Noppen ist geringer als die Dicke des zweiten Filzrings 13.

Das zusammendrückbare Behältnis 2 setzt sich aus einem Faltenbalg 4, einem Federelement 5 und einem im bohrrichtungsseitigen Endbereich des Faltenbalges 4 angeordneten Auflageteller 6 zusammen. Sowohl der Auflageteller 6, als auch das Flanschteil 1 weisen an der Aussenkontur je einen profilierten Bereich 9, 10 auf, die mit dem Faltenbalg 4 in formschlüssiger Verbindung stehen. Das Federelement 5 stützt sich am Auflageteller 6 und am bohrrichtungsseitigen, stimseitigen Bereich des Flanschteils 1 ab und drückt den Faltenbalg 4 auseinander. Der Auflageteller 6 überragt den Bohrer 22 in der Ruhestellung und weist eine zentrale Durchtrittsöffnung für den Bohrer 22 auf.

Das Flanschteil 1 dient der Aufnahme und der Führung eines Tiefenanschlags 29. In einer parallel zur Längserstreckung des Flanschteils 1 verlaufenden Aufnahmebohrung 30 des Flanschteils 1 ist ein relativ zum Flanschteil 1 verschiebbares stabförmiges Übertragungselement 27 gelagert. Das Übertragungselement 27 steht in fester Verbindung mit dem Auflageteller 6. Mittels eines, am Übertragungselement 27 axial festlegbaren Anschlagelements 28 ist die Verschiebung des Übertragungselementes 27 gegenüber dem Flanschteil 1 begrenzbar.

## Patentansprüche

1. Vorrichtung zum Auffangen von Bohrklein und Staub für Bohrgeräte mit einem, zum Befestigen an einem Gehäuse (23) des Bohrgerätes vorgesehenen Flanschteil (1), einem parallel zur Längsachse des Flanschteils (1) zusammendrückbaren, mit dem Flanschteil (1) in Verbindung stehenden Behältnis (2) und einem ringförmigen Dichtungselement (3), das mit einem rotierenden Teil des Bohrgeräts in Kontakt steht, **dadurch gekennzeichnet, dass** das Dichtungselement (3) in einer umlaufend ausgebildeten, zum Zentrum hin offenen Vertiefung (26) des Flanschteils (1) drehbar gelagert ist, an den Seitenwänden (17, 18) der Vertiefung (26) unter Zwischenlage je eines Filzringes (13, 14) abgestützt ist sowie eine sich im wesentlichen parallel zur Längsachse des Flanschteils (1) erstreckende, ringförmige Dichtungsfläche (25) aufweist.

2. Vorrichtung nach Anspruch 1, **dadurch gekennzeichnet, dass** eine mit einem ersten Filzring (14) zusammenwirkende erste Seitenwand (18) mit Vorsprüngen (15) versehen ist.

3. Vorrichtung nach Anspruch 1, **dadurch gekennzeichnet, dass** zwischen einer zweiten Seitenwand (17) der Vertiefung (26) und einem zweiten Filzring (13) eine an dem zweiten Filzring (13) anliegende Druckscheibe (19) und eine Wellscheibe (20) angeordnet sind.

4. Vorrichtung nach Anspruch 3, **dadurch gekennzeichnet, dass** die dem zweiten Filzring (13) zugewandte Seite der Druckscheibe (19) mit Vorsprüngen (16) versehen ist.

5. Vorrichtung nach Anspruch 3 oder 4, **dadurch gekennzeichnet, dass** die zweite Seitenwand (17) der Vertiefung (26) von einem Innensicherungsring gebildet ist.

6. Vorrichtung nach einem der Ansprüche 1 bis 5, **dadurch gekennzeichnet, dass** die Dichtungsfläche (25) mit einer profilierten Oberfläche (24) versehen ist.

7. Vorrichtung nach einem der Ansprüche 1 bis 6, **dadurch gekennzeichnet, dass** das Flanschteil (1) der Aufnahme und der Führung eines Tiefenanschlags (29) dient.

8. Vorrichtung nach Anspruch 7, **dadurch gekennzeichnet, dass** der Tiefenanschlag (29) von einem parallel zur Längsachse des Flanschteils (1) angeordneten, relativ zum Flanschteil (1) verschiebbaren, mit dem Behältnis (2) verbundenen stabförmigen Übertragungselement (27) und einem am Übertragungselement (27) axial festlegbaren Anschlagelement (28) gebildet ist.

## Claims

1. Device for catching drillings and dust for drills, having a flange part (1) provided for attachment to a housing (23) of the drill, a receptacle (2) which is adapted to be compressed parallel to the longitudinal axis of the flange part (1) and communicates therewith, and an annular sealing element (3) which is in contact with a rotating part of the drill, **characterised in that** the sealing element (3) is mounted for rotation in a peripheral depression (26), open towards the centre, on the flange part (1), is supported on the side walls (17, 18) of the depression (26), with an interposed felt ring (13, 14) in each case, and incorporates an annular sealing face (25) which extends substantially parallel to the longitudinal axis of the flange part (1).

2. Device according to claim 1, **characterised by** the provision of a first side wall (18) with projections (15) which cooperates with a first felt ring (14).

3. Device according to claim 1, **characterised in that** arranged between a second side wall (17) of the depression (26) and a second felt ring (13) are a pressure disk (19), which bears on the second felt ring (13), and a corrugated washer (20).

4. Device according to claim 3, **characterised in that** the side of the pressure disk (19) that is nearest to the second felt ring (13) is provided with projections (16).

5. Device according to claim 3 or 4, **characterised in that** the second side wall (17) of the depression (26) is formed by an inner locking ring.

6. Device according to any of claims 1 to 5, **characterised in that** the sealing face (25) is provided with a profiled surface (24).

7. Device according to any of claims 1 to 6, **characterised in that** the flange part (1) is used to receive and guide a bit stop (29).

8. Device according to claim 7, **characterised in that** the bit stop (29) is formed by a rod-shaped transmission element (27) arranged parallel to the longitudinal axis of the flange part (1), adapted to be displaced in relation to the flange part (1) and joined to the receptacle (2), and by a stop element (28) which is adapted to be axially located on the transmission element (27).

## Revendications

1. Dispositif pour recueillir des débris de forage et de la poussière pour outils de forage, comprenant une partie formant collerette (1) prévue pour être fixée à un carter (23) de l'outil de forage, une gaine (2) compressible parallèlement à l'axe longitudinal de la partie formant collerette (1) et communiquant avec la partie formant collerette (1), et un élément d'étanchéité annulaire (3) qui est en contact avec la partie rotative de l'outil de forage, **caractérisé en ce que** l'élément d'étanchéité (3) est monté tournant dans un renfoncement périphérique (26) de la partie formant collerette (1) ouvert en direction du centre, prend appui sur les parois latérales (17, 18) du renfoncement (26) avec interposition à chaque fois d'une rondelle de feutre- (13, 14) et comporte une surface annulaire d'étanchéité (25) s'étendant sensiblement parallèlement à l'axe longitudinal de la partie formant collerette (1).

2. Dispositif selon la revendication 1, **caractérisé en ce qu'**une première paroi latérale (18) coopérant avec une première rondelle de feutre (14) est pourvue de saillies (15).

3. Dispositif selon la revendication 1, **caractérisé en ce qu'**entre une seconde paroi latérale (17) du renfoncement (26) et une seconde rondelle de feutre (13) sont disposés un disque de pression (19) appliqué contre la seconde rondelle de feutre (13) et un disque ondulé (20).

4. Dispositif selon la revendication 3, **caractérisé en ce que** le côté du disque de pression (19) tourné vers la seconde rondelle de feutre (13) est pourvu de saillies (16).

5. Dispositif selon la revendication 3 ou 4, **caractérisé en ce que** la seconde paroi latérale (17) du renfoncement (26) est formée par un circlip intérieur.

6. Dispositif selon une des revendications 1 à 5, **caractérisé en ce que** la surface d'étanchéité (25) est pourvue d'une surface profilée (24).

7. Dispositif selon une des revendications 1 à 6, **caractérisé en ce que** la partie formant collerette (1) sert à recevoir et à guider une butée de profondeur (29).

8. Dispositif selon la revendication 7, **caractérisé en ce que** la butée de profondeur (29) est formée par un élément de transmission en forme de barre (27), disposé parallèlement à l'axe longitudinal de la partie formant collerette (1), mobile par rapport à la partie formant collerette (1) et relié à la gaine (2), et par un élément de butée (28) pouvant être bloqué axialement sur l'élément de transmission (27).
